(19) **Europäisches Patentamt / European Patent Office / Office européen des brevets**

(11) **EP 2 333 481 B1**

(12) **FASCICULE DE BREVET EUROPEEN**

(45) Date de publication et mention de la délivrance du brevet:
**15.10.2014 Bulletin 2014/42**

(51) Int Cl.:
***G01B 11/24*** *(2006.01)*     ***G06K 9/00*** *(2006.01)*
***G06T 17/00*** *(2006.01)*     ***G06T 11/00*** *(2006.01)*

(21) Numéro de dépôt: **10190983.6**

(22) Date de dépôt: **12.11.2010**

(54) **Système optronique et procédé d'élaboration d'images en trois dimensions dédiés à l'identification**

Optronisches System und Verfahren zur Herstellung dreidimensionaler Bilder zur Identifikation

Optoelectronic system and method for creating three-dimensional identification images

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2009 FR 0905720**

(43) Date de publication de la demande:
**15.06.2011 Bulletin 2011/24**

(73) Titulaire: **Thales**
**92200 Neuilly Sur Seine (FR)**

(72) Inventeurs:
• **Berginc, Gérard**
**94320 Thiais (FR)**
• **Jouffroy, Michel**
**78280 Guyancourt (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 5 559 334**

• **KAPOOR R ET AL: "Features for detecting obscured objects in ultra-wideband (UWB) SAR imagery using a phenomenological approach", PATTERN RECOGNITION, ELSEVIER, GB LNKD-DOI:10.1016/0031-3203(96)00035-0, vol. 29, no. 11, 1 novembre 1996 (1996-11-01), pages 1761-1774, XP004013875, ISSN: 0031-3203**
• **ROBB R A: "Visualization in biomedical computing", PARALLEL COMPUTING, ELSEVIER PUBLISHERS, AMSTERDAM, NL LNKD- DOI:10.1016/S0167-8191(99)00076-9, vol. 25, no. 13-14, 1 décembre 1999 (1999-12-01), pages 2067-2110, XP004363672, ISSN: 0167-8191**

**Description**

L'invention concerne les systèmes optroniques d'identification d'un objet dans le domaine technique de l'imagerie optique non-conventionnelle et plus particulièrement l'imagerie photonique tridimensionnelle. Cette imagerie est communément appelée « full-3D » qui est à différencier d'une image 2.5D qui ne contient que l'information intensité 2D plus celle de profondeur.

L'identification automatique d'objets par un système optronique est utilisée dans de multiples domaines. On peut citer en exemple le domaine de la défense et de la sécurité pour la reconnaissance de cibles, le domaine médical pour la détection de tumeurs sous-cutanées et cutanées ou le domaine de la micro-électronique pour l'observation des composants lors de leur fabrication. Un système optronique crée une image 3D d'un objet présent dans une scène optronique complexe. Cette image doit par exemple permettre de discriminer les cibles camouflées derrière des filets de camouflage, sous des arbres... Cette condition opérationnelle constitue le problème majeur.

Dans ce domaine de l'imagerie 3D, il est nécessaire d'obtenir un ensemble de mesures de l'objet à reconstruire dépendant d'un paramètre variable (angle et/ou dimension en profondeur par exemple), cet ensemble de données permet de reconstruire le volume en appliquant des techniques de reconstruction inverse. D'un point de vue mathématique, la technique se décompose en deux étapes : une mesure directe, éventuellement traitée en utilisant un modèle des phénomènes physiques mesurés, puis une reconstruction par inversion à partir de ces mesures directes. Le premier problème consiste à fournir en un temps raisonnable un ensemble de données directes exploitables pour le processus d'inversion. Ce problème recouvre naturellement l'ensemble des problèmes technologiques (laser d'illumination grande cadence, courte impulsion, bloc détecteur rapide, pointage). Le second problème concerne la méthode d'inversion utilisée et sa mise en oeuvre mathématique.

On connaît un premier système optronique pour l'identification d'objets. Il s'agit d'un système d'imagerie active 3D profilométrique dont les caractéristiques sont divulguées dans une publication dont les références sont les suivantes : « Lincoln laboratory Journal Vol 15 number 1 2005, Jigsaw: a foliage Penetrating 3D imaging laser radar system ». On connaît le brevet américain US/2008/0181487 présentant la méthode de recalage spatiale du mobile aérien. Il s'agit d'un système d'acquisition air/sol qui effectue un certain nombre de mesures sur une scène optronique selon des angles d'observation différents. Pour chaque angle d'observation, le système récupère des informations de distance et d'intensité sur une grille de grande dimension (> 256x256). Le système utilise le principe de la profilométrie pour discriminer les différents points d'échos situés sur une même ligne de visée. Le principe de cette imagerie 3D repose sur l'utilisation d'une source laser à impulsion courte (de l'ordre de la nanoseconde) et haute cadence d'échantillonnage. Une seule impulsion laser illumine la scène complète ; un détecteur matriciel 2D compte les photons rétrodiffusés par la scène et leur retard par rapport à l'émission. L'image est produite par balayage. Cette technique nécessite alors une optimisation du balayage pour produire une image dans un temps compatible du déplacement de l'UAV (« Unmanned Aerial Vehicle ») par exemple. L'image produite par ce dispositif est une carte de photons détectés en 3D grâce aux multiples échos sur une ligne de visée. L'accumulation de plusieurs cartes de ce type pour des angles d'observation différents après recalage spatial permet de créer des nuages de points évoquant la surface de l'objet à identifier. Le problème de la fonction inverse de construction de l'image 3D se limite à une concaténation d'un ensemble de données dans le même repère et à une extraction de la zone d'intérêt contenant les données à identifier. Ce système présente plusieurs difficultés technologiques. Tout d'abord, il est nécessaire d'utiliser un laser à impulsion courte et un système de détection pourvu d'une électronique rapide afin de déterminer la distance entre la source laser et le détecteur pour chacun des pixels. De plus, l'étape de recalage des nuages de points requiert l'utilisation d'un système de pointage et de géo-localisation performant afin de permettre la concaténation d'images dans un même repère. En résumé, une telle solution présente un coût important liée à la technologie à mettre en oeuvre pour l'acquisition des images et ne permet donc pas de démocratiser une telle application de détection « full-3D » dans tous les domaines. En outre, cette solution reste difficile à mettre en oeuvre pour un système aéroporté guidé.

On connaît un second système optronique d'imagerie tomographique 3D en transmission utilisé en imagerie médicale. Le principe général est le suivant : un fin pinceau de rayons X, issu d'une source collimatée, balaye le corps du patient et réalise un premier profil de l'objet. Le système subit alors une rotation élémentaire et le processus est répété, fournissant ainsi de nouveaux profils, provenant d'un angle de projection différent. A partir de ces données et grâce aux algorithmes basés sur la théorie de Radon, les valeurs des coefficients d'atténuation en chaque point de la section doivent être calculées, fournissant ainsi une cartographie des tissus internes. Le scanner s'appuie donc sur l'absorption plus ou moins importante des rayons X selon le milieu traversé. Le problème direct dans ce cas s'appuie sur la connaissance des paramètres d'absorption électromagnétique des tissus traversés.

Une troisième solution connue est un système de modelage d'objets 3D à partir de vues multiples. On connaît deux grands procédés principaux de construction synthétique d'objets selon ce principe.

Le premier procédé consiste en l'extraction des silhouettes. L'idée est de placer l'objet à représenter en trois dimensions sur un plateau tournant et d'effectuer des prises de vues en imagerie visible classique selon différents angles. Après extraction de la silhouette de l'objet sur chaque image, on applique chaque silhouette sur un volume 3D selon l'angle l'observation en ne conservant que la partie du volume qui se trouve à l'intérieur de la silhouette. Ce procédé présente un problème lié à l'éclairage de l'objet qui doit comporter le moins d'ombres possible et l'objet doit se détacher parfaitement du fond quel que soit l'angle. On obtient par ce moyen une enveloppe extérieure de l'objet peu détaillée et si l'objet contient des zones d'ombre ou de bruit une grande partie de l'information se trouve perdue. De plus, ce procédé ne permet pas l'identification d'objet partiellement masqué.

Le second procédé est la méthode de minimisation de surfaces. Cette technique consiste à reconstruire une surface à partir de points remarquables sur les images 2D d'objets par algorithmes de minimisation de la surface ou de raccordement de petits patchs. La technique consistant à appliquer des patchs sur une grille de points télémétrés est effectuée en général depuis un seul angle d'observation ; elle peut être étendue à plusieurs angles dans le cadre d'une reconstruction complète moyennant un temps et des moyens de calcul importants mais ne peut s'appliquer à des objets partiellement masqués du fait de la nécessaire continuité entre les patchs. Ces méthodes s'apparentent aux techniques de stéréoscopie permettant de reproduire la perception du relief à partir de deux images planes (image 2.5D, perception de la profondeur).

Selon Kapoor R. et al, "Features for detecting obscured objects in ultra-wideband (UWB) SAR imagery using a phenomenological approach", ISSN: 0031-3203, une détection d'objets cachés par radar à synthèse d'ouverture est proposée.

En définitive, les problèmes des solutions de l'état de la technique sont d'une part le coût et l'inaccessibilité des moyens technologiques et d'autre part l'impossibilité d'être utilisées dans des milieux inconnus et non maîtrisés ou de permettre la détection d'objets camouflés.

Le but de l'invention est de fournir une solution de détection et de reconstruction en 3D avec des moyens technologiques accessibles en termes de coût et de performance. En outre, la solution technique doit pouvoir être utilisée pour des applications dont la scène à observer n'est pas maîtrisée par l'opérateur et également partiellement masquée.

Plus précisément, l'invention est un système optronique d'identification d'un objet selon la présente revendication 1.

Le système comporte un moyen d'émission d'une impulsion électromagnétique pouvant émettre vers l'objet et le capteur photosensible est apte à détecter le niveau d'intensité de l'impulsion électromagnétique réfléchie par l'objet.

Avantageusement, le système comporte également un moyen de pointage vers une position de référence permettant au capteur photosensible d'enregistrer une séquence d'images prises selon des angles d'observation proches et centrées sur la position de référence et en ce que le moyen de traitement informatique est apte à positionner sur la position de référence chaque image de la séquence décalée de la position de référence.

Avantageusement, le système comporte également des moyens de mesure de la distance entre le capteur photosensible et la position de référence pour que le moyen de traitement informatique soit apte à modifier les dimensions de l'objet représenté dans une image en fonction de la dite distance de sorte que les dimensions de l'objet représenté dans les images d'une même séquence utilisées pour la reconstruction soient équivalentes entre les images.

Avantageusement, le moyen de traitement informatique est apte à modifier l'éclairement d'une image en fonction de la distance entre le capteur photosensible et la position de référence de sorte que les images d'une même séquence utilisées pour la reconstruction soient d'un niveau d'éclairement équivalent.

Selon l'un quelconque mode de réalisation précédent, caractérisé en ce que le capteur photosensible est monté sur un engin mobile apte à se déplacer autour de l'objet.

Selon l'un quelconque mode de réalisation en imagerie active, le moyen d'émission d'une impulsion électromagnétique et le capteur photosensible sont montés sur un engin mobile apte à se déplacer autour de l'objet.

Selon un mode de réalisation préféré l'engin mobile est un aéronef et le moyen de traitement informatique est localisé dans une station de calcul distante du capteur photosensible connecté au capteur par les moyens de communication.

Selon l'un quelconque mode de réalisation précédent, le système comporte une base de données d'objet de référence pour identifier l'objet par comparaison avec la reconstruction en trois dimensions.

L'invention concerne également un procédé de traitement informatique pour l'identification d'objet par reconstruction de l'objet en trois dimensions, selon la présente revendication 10.

Avantageusement, le procédé comporte, à la suite de l'étape d'acquisition d'images, une étape de positionnement d'une image sur une position de référence.

Avantageusement, le procédé comporte, à la suite de l'étape d'acquisition d'images, une étape de redimensionnement d'une image par rapport à une image de référence pour que les dimensions de l'objet détecté dans une image soient similaires aux dimensions de l'objet dans une image de référence.

Avantageusement, le procédé comporte, à la suite de l'étape d'acquisition d'images, une étape de modification de l'éclairement d'une image en fonction d'une image de référence pour que l'éclairement de l'image soit similaire à l'éclairement d'une image de référence.

Avantageusement, le procédé comporte, à la suite de l'étape d'acquisition d'images, une étape de traitement du sinogramme d'une image pour extraire les informations relatives à l'objet des autres informations de l'image. Le sinogramme est une représentation de l'évolution d'une même ligne (ou d'une même colonne) de l'image et de sa variation en fonction de l'angle selon la deuxième dimension (ordonnée).

Un premier avantage du système optronique et du procédé de reconstruction d'image associé est de pouvoir détecter des objets partiellement masqués avec des moyens technologiques ne nécessitant pas une performance d'acquisition et de traitement élevée. En effet, au contraire de la solution d'imagerie active profilométrique de l'état de la technique, le capteur photosensible au rayonnement laser est un moyen de détection classique. Ainsi, l'invention permet de disposer d'une solution à moindre coût car la problématique de la reconstruction en 3D à partir d'images en deux dimensions est résolue par le procédé de traitement des images. Le moyen d'émission d'impulsion électromagnétique, le capteur photosensible et les moyens de géo-localisation impliquent des contraintes de développement moindres et permettent de fournir une solution à moindre coût aux applications embarquées dans des milieux d'utilisation contraints.

Un second avantage de l'invention est que le procédé de tomographie utilisé ne requiert pas de disposer d'un contrôle spatial fin de l'engin mobile embarquant le capteur photosensible (seulement 3 degrés de liberté contre 6 avec le dispositif profilométrique classique ou trajectoire fixe en imagerie médicale), c'est-à-dire en position, mouvement ou orientation et également ne requiert pas de connaître les coefficients d'absorption des objets présents dans la scène au contraire de solutions de tomographie en transmission habituelles. Ainsi, le système et le procédé de traitement des images peuvent être utilisés pour des domaines d'applications plus nombreuses et notamment pour les applications de cibles camouflées.

Un troisième avantage inhérent au procédé de reconstruction en 3D est de fournir une solution de détection d'objet bien plus performante que pour une solution de détection à partir d'images en 2D ou 2,5D. En effet, une image en 3D fournit à l'opérateur et aux systèmes d'analyse beaucoup plus d'informations relatives à l'objet améliorant ainsi les capacités de diagnostics.

L'invention sera mieux comprise et d'autres avantages apparaîtront à la lecture de la description qui va suivre donnée à titre non limitatif et grâce aux figures annexées parmi lesquelles :

La figure 1 représente un schéma de principe d'un mode de réalisation de l'invention pour un système comportant une plateforme d'acquisition aéroportée et une station sol de traitement des images.

La figure 2 représente le principe de reconstruction en trois dimensions par tomographie.

La figure 3 représente les étapes du procédé de traitement des images selon l'invention.

La figure 4 représente un schéma d'acquisition de la séquence d'images dans le cadre d'une expérimentation de laboratoire à échelle réduite.

La figure 5 représente un schéma illustrant le principe d'une première fonction de correction d'image pour le recalage décalée d'une position de référence.

La figure 6 représente un schéma illustrant le principe d'une seconde fonction de correction d'image pour le redimensionnement d'une image par rapport à une image de référence.

La figure 7 représente un schéma illustrant le principe d'une troisième fonction de correction d'image pour homogénéiser l'éclairement des images d'une même séquence.

La figure 8 représente un schéma illustrant le principe d'une quatrième fonction de correction d'image pour palier le défaut de tâche focal d'un dispositif laser.

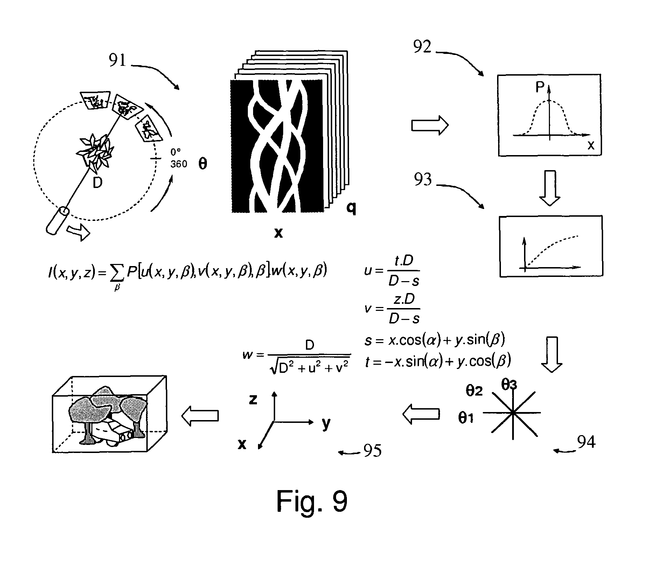

La figure 9 représente un schéma illustrant les étapes de l'algorithme de transformation inverse.

La figure 10 représente un schéma illustrant le principe de l'étape d'extraction d'une zone d'intérêt dans une zone en 3D selon le procédé.

La figure 11 représente un schéma illustrant le principe de l'étape de construction de la surface de l'objet en 3D détecté.

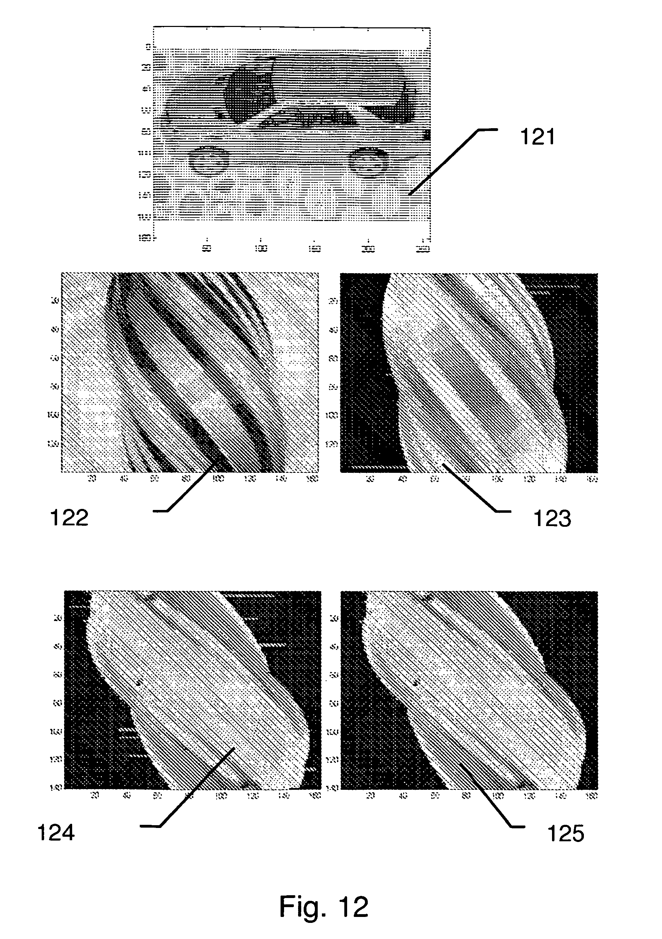

La figure 12 représente le cas d'une cible globalement moins réfléchissante que le fond de la scène et le résultat d'une cinquième fonction de correction d'image sur les sinogrammes associés. Le sinogramme est une représentation de l'évolution d'une même ligne (ou d'une même colonne) de l'image et de sa variation en fonction de l'angle selon la deuxième dimension (ordonnée).

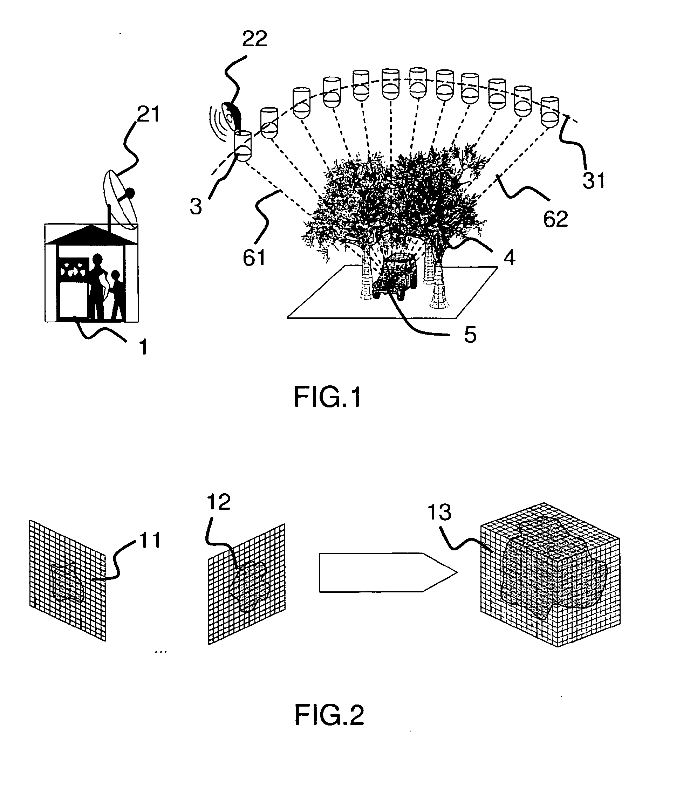

Un mode préférentiel de l'invention utilise l'imagerie active conventionnelle, c'est à dire la réalisation d'images 2D en intensité à l'aide d'un système ladar monostatique classique. Toutefois, le système et le procédé tels que revendiqués s'appliquent également à l'imagerie passive. Selon ce mode préférentiel tel que représenté par la figure 1 une plate forme aéroportée 3 permet d'acquérir une séquence d'images d'une large scène au sol comportant un objet ciblé 5, dans ce cas-ci un véhicule automobile, partiellement camouflé par d'autres objets 4, des arbres ou filet de camouflage par exemple, au cours d'une trajectoire prédéfinie 31 selon des angles d'observations 61 et 62 connus. Des moyens de communications 21 et 22 permettent de transmettre les images acquises à des moyens de traitement des images situés dans une station sol distante 1.

Comme représenté en figure 2, après un éventuel recalage et traitement de ces images 11 et 12, l'algorithme de rétroprojection filtrée permet de reconstruire par tomographie un volume 3D 13 de la scène. Etant donné que l'objet ciblé est opaque aux impulsions électromagnétiques du laser, c'est-à-dire que l'impulsion est réfléchie par la surface de l'objet, il n'y a pas de correction de la mesure directe puisque l'intégrale le long d'une ligne d'observation se limite à la valeur de l'intensité rétrodiffusée en un point. La scrutation de ce volume par plans de coupe permet de repérer une région d'intérêt. Le traitement de cette région permet d'extraire un certain nombre de voxels ("**vo**lumic pix**els**" en anglais ou pixels volumiques) qui après regroupement sont enveloppés par une surface permettant de faire apparaître une forme tridimensionnelle comparable à une structure 3D connue de type CAO, (Conception Assistée par Ordinateur) à des fins d'identification (par "matching", reconnaissance de forme, comparaison à des spin-images...).

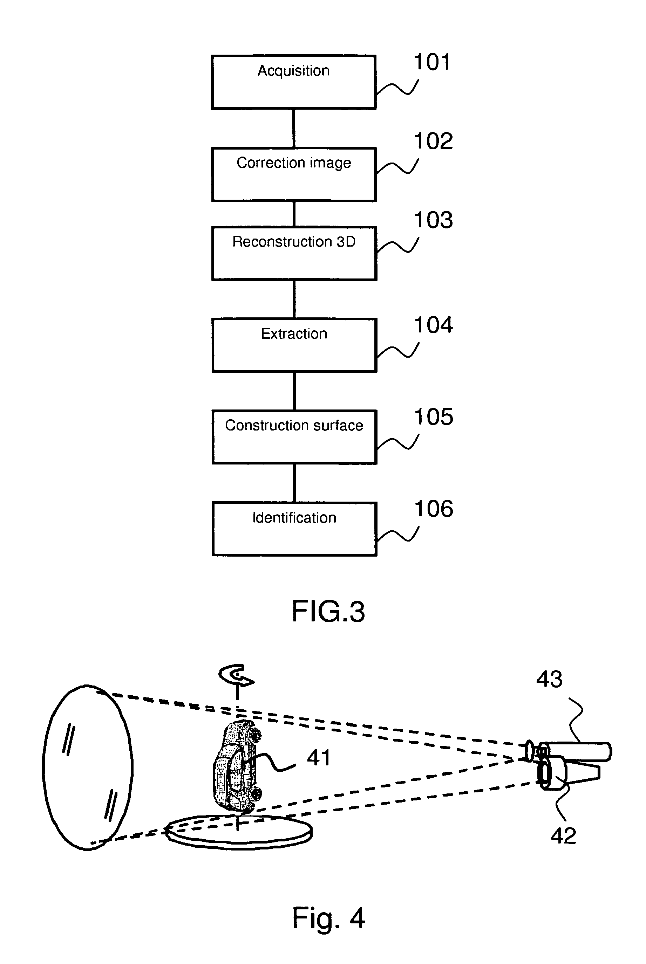

L'invention concerne également le procédé de traitement informatique des images tel que représenté par la figure 3 qui comporte un certain nombre d'étapes dont il convient de respecter les spécifications pour obtenir le résultat attendu. Le procédé sera l'objet de la description à la suite de la description détaillée des moyens structurels pour mettre en oeuvre l'invention.

La plate-forme aéroportée 3 comporte un moyen d'émission d'une impulsion électromagnétique. Il s'agit d'un dispositif ladar utilisé en configuration monostatique ou quasi-monostatique (angle d'émission égal à l'angle de réception), l'intérêt de cette configuration étant qu'il subsiste un minimum de zones d'ombres dans la scène éclairée. De plus, l'optique utilisée est dimensionnée pour le capteur et la longueur d'onde choisie, là encore dans le but d'améliorer leur netteté et leur contraste. Les largeurs spatiale et temporelle de l'impulsion laser doivent être suffisantes pour éclairer l'ensemble de la scène, typiquement plusieurs dizaines de mètres.

A titre d'exemple non limitatif, les caractéristiques du laser sont les suivantes pour éclairer une scène contenue dans un volume de 30 mètres de côté :

- laser à impulsion supérieure à 200 ns,
- divergence du laser : de 15 mrad à 1 km à 3 mrad à 5 km,
- la fréquence de répétition doit être d'une centaine de hertz au minimum, typiquement, de façon à rendre la post intégration possible. A cette cadence, pour un porteur évoluant à 50 m/s par exemple, le déplacement est de 50 cm entre deux images consécutives. A 5 km, le débattement angulaire correspondant est de 100 $\mu$rad, ce qui autorise la post intégration puisque le débattement angulaire nécessaire entre deux images sera de l'ordre du degré (c'est-à-dire 17.5 mrad soit typiquement 175 fois plus grand),
- longueur d'onde 1.5 $\mu$m (furtivité, sécurité oculaire),
- faible énergie par impulsion (de l'ordre d'une dizaine de mJ, typiquement).

Le capteur photosensible, également embarqué sur la plate-forme aéroportée 3, est constitué d'un détecteur sensible dans le proche infrarouge (par exemple une matrice 2D de grandes dimensions InGaAs). Le processus d'acquisition est alors celui d'une image active laser bi-dimensionnelle en intensité.

Les images acquises sont transmises sans délai à une station de traitement au sol par des moyens de communication radiofréquence ou optique 21 et 22 connus de l'homme du métier dont les caractéristiques ne font pas l'objet d'une limitation de l'invention. Les caractéristiques techniques des moyens de communication déterminent la distance possible entre la station de traitement et l'engin mobile embarquant les moyens d'acquisition d'image. En configuration air/sol, les contraintes liées à la turbulence, à la vitesse de déplacement du porteur, à la dynamique du capteur et à la précision du pointage permettent une distance de l'ordre de 5 km typiquement entre le porteur et la cible.

Des moyens de traitement d'images 1 permettent de réaliser un post traitement de corrections d'images dont les fonctions seront décrites plus en détail dans la suite. Ces moyens de traitement permettent de corriger les images avant d'exécuter le processus de reconstruction en 3D afin d'améliorer la précision de reconstruction de l'objet. Ces mêmes moyens de traitement d'images permettent ensuite de réaliser de façon automatisée les opérations d'identification ou de transmettre à des moyens d'affichage la reconstruction en 3D pour identification manuelle par un opérateur.

Le fait de positionner le bloc émission/détection sur une plate-forme aéroportée 3 permet d'observer la scène sur un grand débattement angulaire et selon plusieurs trajectoires. Dans ce mode de réalisation où un aéronef est utilisé, plusieurs passes de l'aéronef (par exemple un drone ou un hélicoptère) sont alors réalisées selon des plans d'observation azimutaux différents. La multiplication des angles d'observation apporte une information supplémentaire et affine la résolution de la reconstruction finale.

Des moyens de géo-localisation doivent permettre de recaler chaque image 2D par rapport à un point de référence de l'espace (théoriquement 3 degrés de liberté, le degré de liberté de rotation étant le plus limité). La précision du point de référence est de l'ordre de 1 m pour quelques kilomètres d'altitude, cette précision est suffisante pour la reconstruction. Ces moyens de géo-localisation peuvent être un dispositif de télémétrie ou un dispositif de positionnement par satellite. Les données télémétriques ou de positionnement par satellite sont indispensables car elles permettent la localisation d'un point fixe dans l'image et le recalage de toute la séquence par rapport à ce point fixe. L'utilisation de la centrale inertielle de la plate-forme aéroportée 3 (ou aéronef) et de la télémétrie sont envisageables et vont également dans le sens d'un accroissement de la précision du positionnement du centre de rotation.

Un moyen de pointage du faisceau laser et du capteur photosensible est utilisé afin de centrer la prise de vue sur le point de référence.

Opérationnellement, les images peuvent être transmises au fur et à mesure à une station de traitement au sol par des moyens de communication radio classiques ou traitées directement au niveau de la plate-forme aéroportée.

L'objet revendiqué concerne également le procédé de traitement d'image pour l'identification d'un objet. La figure 3 représente les étapes du procédé de traitement des images selon l'invention. Le procédé de traitement des images comporte une première étape 101 d'acquisition des images, une seconde étape 102 de correction des images, une troisième étape 103 de reconstruction en 3D de la scène acquise, une quatrième étape 104 d'extraction d'une zone d'intérêt dans la reconstruction 3D comportant l'objet, une cinquième étape 105 de formation de la surface de l'objet reconstruit et une sixième étape 106 d'identification de l'objet reconstruit. L'ensemble de ces étapes se déroule successivement, toutefois d'autres étapes préliminaires, intermédiaires ou supplémentaires peuvent être ajoutées au déroulement du procédé sans pour autant sortir du cadre de l'invention.

Plus précisément, la première étape 101 d'acquisition fournit une séquence d'images selon plusieurs angles d'observation et également plusieurs images pour un même angle d'observation afin de d'obtenir un rapport signal/bruit le plus élevé possible. De plus, pour être exploitables par la technique proposée et fournir une représentation optimale, les images doivent présenter de la dynamique et du contraste en particulier entre la cible que l'on souhaite voir représentée de façon tridimensionnelle et le reste de la scène. La figure 4 illustre une expérimentation de laboratoire à l'échelle réduite permettant de représenter de façon simplifiée une étape d'acquisition au cours de laquelle l'objet 51 à identifier est éclairé par une source d'émission d'une impulsion électromagnétique 43 et détecté par le capteur photosensible 42 selon plusieurs angles. Selon une étape d'acquisition optimale, l'objet est vu selon tous les angles d'observation possibles contenus dans un plan afin de reconstruire l'objet de façon la plus complète possible. Néanmoins, l'étape d'acquisition peut comporter un nombre réduit d'angles de vue permettant de modéliser une reconstruction partielle en trois dimensions. Ainsi, l'identification à partir d'un modèle 3D est améliorée par rapport à une identification à partir d'une vue en 2D.

La seconde étape 102 de correction d'image comporte plusieurs fonctions de correction indépendantes l'une des autres. Une première fonction de correction est un positionnement d'une image par rapport à une position de référence dans l'image. Lorsque le capteur photosensible est monté sur un engin mobile, comme par exemple un aéronef, dont la trajectoire n'est pas parfaitement maîtrisée, la fonction de positionnement des images ou recalage des images permet d'améliorer le facteur signal/bruit d'une séquence d'image dont les angles d'observation sont très proches. Cette fonction de recalage d'une image par rapport à une position de référence s'effectue par détermination du coefficient de corrélation entre deux images successives de la séquence.

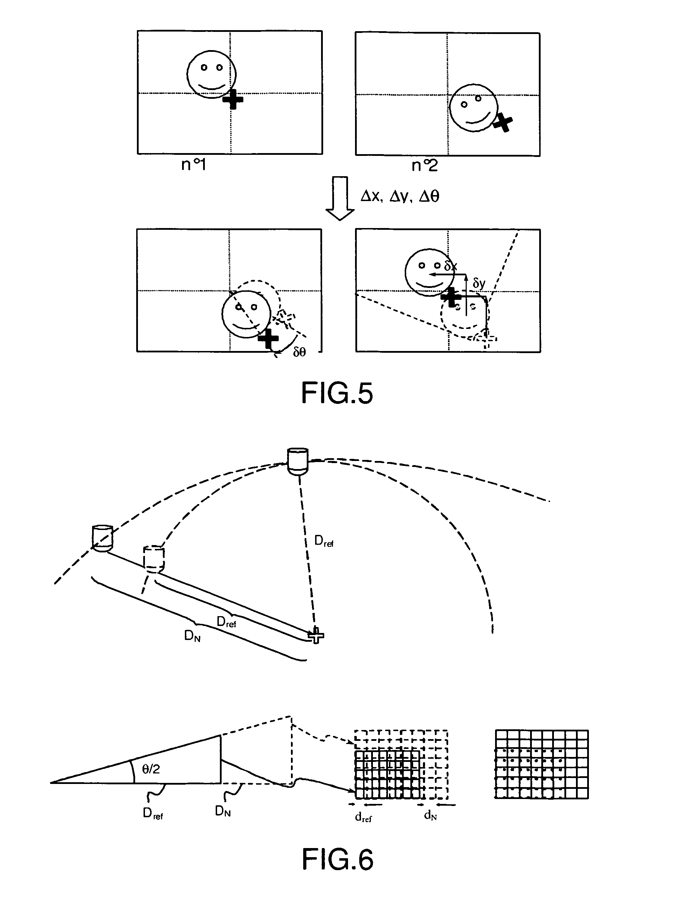

Sur la figure 5 qui présente deux images voisines mais décalées de ($\Delta$x, $\Delta$y, $\Delta\theta$) l'une de l'autre, le processus de recalage par matrice de corrélation permet d'obtenir une séquence sans saut d'images, mais également de corriger le positionnement du point fixe de rotation d'une image à l'autre sans aucune connaissance télémétrique ou de positionnement par satellite. Le coefficient de corrélation p(X,Y) est donné par l'expression habituelle :

$$\rho(X,Y) = \frac{Cov(X,Y)}{\sqrt{Var(X)Var(Y)}}$$

où Cov(X,Y) est la fonction de covariance définie par :

$$Cov(X,Y) = E\big[(X - \langle X \rangle)(Y - \langle Y \rangle)\big] = \frac{1}{n}\sum_{i=1}^{n}(X_i - \langle X \rangle)(Y_i - \langle Y \rangle)$$

et Var(X) est la variance définie par :

$$Var(X) = \frac{1}{n}\sum_{i=1}^{n}(X_i - \langle X \rangle)$$

On effectue une rotation $\delta\theta$ de l'image n°2 et on calcule le coefficient de corrélation entre les deux images sur une portion de l'image de grande taille (contenant notamment la zone de l'image où se trouve la cible à recaler). On décale la seconde image selon les directions $\delta$x et $\delta$y à l'intérieur d'une fenêtre de taille prédéfinie qui représente le décalage maximum auquel on peut s'attendre d'une image à l'autre. On répète l'opération en incrémentant l'angle de rotation jusqu'à la valeur maximum qu'on s'autorise. Le maximum de la matrice de corrélation trouvée donne les valeurs

de décalage ($\Delta$x, $\Delta$y) entre les deux images pour un $\Delta\theta$ donné. On répète l'opération pour chaque image de la séquence. Pour augmenter la dynamique d'une image on peut effectuer ensuite un moyennage sur plusieurs images recalées si elles correspondent à des angles d'observation suffisamment proches.

De plus, pour que les images soient directement exploitables, il est nécessaire de mettre en oeuvre une seconde fonction de correction liée à la variation de la distance entre le capteur photosensible et la position de référence tout au long de la séquence de prise d'images. En effet, il est nécessaire que les images soient prises à distance constante de cette position de référence. Opérationnellement, pour le mode de réalisation préférentiel où le capteur photosensible est monté sur un aéronef, la trajectoire est plutôt rectiligne, voire incurvée mais rarement circulaire. Pour cela, la fonction de correction géométrique permet de résoudre le problème de variation de distance entre le capteur et la position de référence visée. Cette fonction permet de modifier la taille de chaque image en fonction de sa distance à la trajectoire circulaire (application d'un rapport $\Gamma$) si on suppose que l'on travaille à champ constant de façon à ce que la dimension surfacique commune à toutes les images de la séquence soit identique et donc leurs dimensions en pixels également. L'élaboration de la fonction de correction géométrique comporte une première étape de détermination de l'image de référence de la séquence pour laquelle le capteur photosensible est le plus proche de la cible. Cette image servira de référence spatiale pour la reconstruction. Pour cette image de référence la distance cible/porteur est référencée dans la figure 6 par $D_{ref}$. Il y a ensuite une seconde étape de détermination pour chaque image à partir des données de géo localisation de la distance cible/porteur référencée $D_N$. Chaque image N de la séquence doit être sur-échantillonnée, selon le pas de l'image de référence $d_{ref}$ sur la grille de pas $d_N$. Ces deux pas sont liés par la relation :

$$\frac{D_N}{D_{ref}} = \Gamma = \frac{d_N}{d_{ref}}.$$

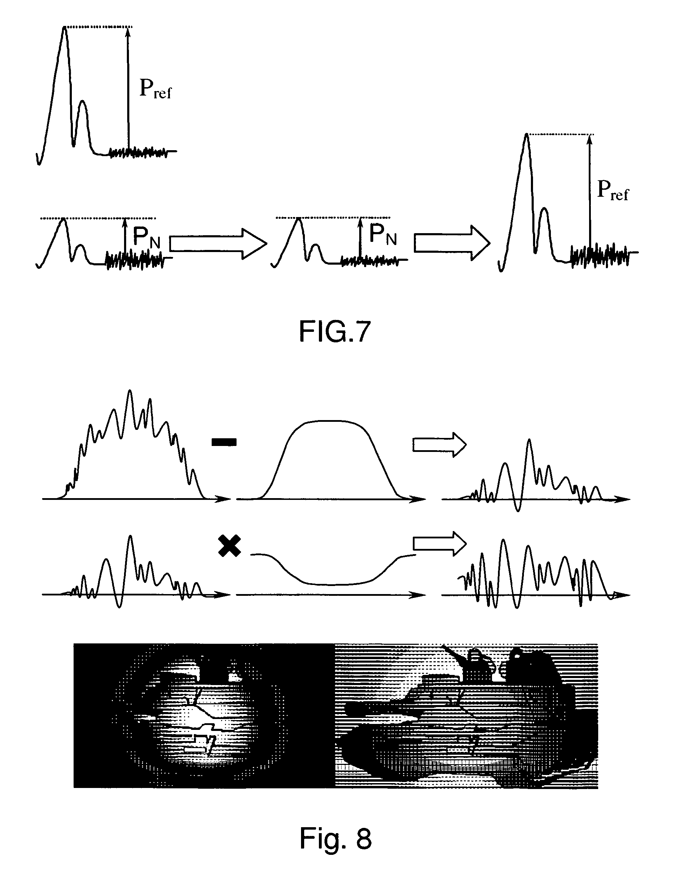

Une troisième fonction de correction d'éclairement de la scène améliore la reconstruction 3D car la puissance lumineuse reçue sur le détecteur varie en $1/D^4$ (équation ladar), D étant la distance ladar/cible. La figure 7 représente le principe de correction. Le signal de puissance $P_{ref}$ représente la puissance lumineuse reçue à la distance $D_{ref}$ correspondant à la distance $D_{ref}$ cible/porteur la plus proche. $P_N$ représente la puissance lumineuse reçue à la distance $D_N$ cible/porteur pour une image N de la trajectoire. La fonction de correction d'éclairement comporte une première étape de réduction du bruit puis une étape d'étalement de la dynamique de l'image pour atteindre le niveau de l'image de référence.

Une quatrième fonction de correction dont le principe est illustré en figure 8 pouvant être appliquée concerne la figure d'éclairement liée à la forme spatiale du faisceau laser. Celle-ci peut être gaussienne (cas idéal du laser monomode), « top-hat » ou multimode. Sans correction, l'image est très lumineuse dans la partie centrale et de plus en plus foncée en bordure d'image. En connaissant la figure d'éclairement du laser, cette quatrième fonction de correction permet de s'approcher d'un éclairement uniforme sur la surface de l'image. Cette quatrième fonction comporte plusieurs étapes. Une première étape est l'application d'un filtre passe-bas sur l'image dont on a retiré les éventuels pics d'intensité spéculaire, une seconde étape est la soustraction de l'image filtrée et de l'image initiale et une troisième étape est la multiplication de l'image résultante par le profil inverse.

L'algorithme de reconstruction pourra fonctionner sans pré-traitement d'image supplémentaire dans tous les cas où la cible se détache du fond en étant globalement plus réfléchissante que celui-ci. Dans le cas où la cible est globalement moins réfléchissante que le reste de la scène, on appliquera à la séquence d'images initiale une cinquième fonction de correction visant à séparer l'image du fond par traitement de l'image. L'image 121 illustre ce cas : l'image de la cible présente une bonne dynamique mais le reste de la scène est réfléchissant. L'algorithme de reconstruction peut s'appliquer à l'image brute ; cependant, le traitement de l'image 3D reconstruite s'avère plus difficile étant donné l'inversion de contraste : ce sont les parties faiblement réfléchissantes qui ressortent dans une espèce de négatif tridimensionnel. L'image reconstruite tri-dimensionnelle s'avère donc difficile à lire. Dans ce cas où la cible se détache visuellement du fond, on travaille directement sur le sinogramme pour séparer la cible d'intérêt du fond. La technique est de lire le sinogramme 122 ligne par ligne (i.e. angle par angle) en partant du premier pixel puis en partant du dernier pixel dans l'autre sens et d'exploiter la rupture d'intensité entre le signal émanant du fond et celui de la cible ; on obtient le sinogramme 123. Ce traitement peut être rendu automatique. On peut encore affiner le traitement de l'image en lissant l'enveloppe du sinogramme relatif à la cible : le sinogramme 124 présente des résidus issus du fond de la scène qui ont disparu après lissage sur le sinogramme 125. Cette correction est avantageuse pour l'utilisation de l'invention dans des milieux complexes à faible contraste ou contraste inversé. La résolution de cette problématique est particulièrement importante pour identifier les objets camouflés dans la scène observée.

D'autres fonctions de traitement d'images pour faciliter la reconstruction en 3D peuvent être utilisées au cours du procédé de traitement d'images sans sortir de la portée de l'invention.

La troisième étape 103 correspond à l'étape de reconstruction de la totalité de la scène commune à l'ensemble des images de la séquence et est effectuée par des techniques de transformation de Radon (rétroprojection filtrée par exemple). Celle-ci consiste à filtrer toutes les projections et à effectuer un changement de variables permettant de passer d'un système de coordonnées cylindriques (x,y,θ) à un système cartésien (x,y,z). La fonction de transformation inverse de Radon est réalisée avec des images représentant des données de réflexion de l'impulsion électromagnétique sur la surface de d'objets opaque de la scène. Habituellement, la technique de transformation inverse de Radon est effectuée à partir de données liées à l'absorption de la structure de l'objet dans le domaine médical par exemple. Il est nécessaire de déterminer les fonctions d'absorption du milieu par simulation de la propagation de l'onde électromagnétique dans le milieu considéré. Cette simulation est dans tous les cas mathématiquement approchée. Sa précision dépend du modèle physique utilisé qui n'est qu'une approche mathématique de la réalité physique. Ce sont ces fonctions d'absorption qui sont inversées. La précision de l'inversion dépend directement des données d'absorption simulées. Dans le cas que nous considérons, l'inversion est directement effectuée sur les valeurs mesurées dans le cadre du problème direct. Le problème inverse considéré ici n'est pas tributaire de valeurs intermédiaires simulées à l'aide de modèles approchés.

L'algorithme comporte une première étape 91 de lecture de la séquence d'images complète, c'est-à-dire une séquence d'images prises selon plusieurs angles d'observation θ autour de l'objet. Il comporte une seconde étape 92 de pondération des pixels en fonction de l'écart au centre de l'image. Cette étape est destinée à minimiser le décalage des points qui sont en bordure d'image afin de réduire le facteur de bruit lors de la reconstruction. L'algorithme comporte ensuite une troisième étape 93 de filtrage de type passe bas afin de lisser les images, puis une quatrième étape 94 de calcul des voxels dans chaque plan de coupe par rétroprojection puis une cinquième étape 95 de reconstruction du volume par sommation des rétroprojections.

La fonction de transformation inverse de Radon est la suivante :

I est le calcul des voxels dans chaque plan de coupe par rétroprojections issus de la quatrième étape 94, P sont les pixels projetés filtrés issus de la troisième étape 93 et w est le facteur de pondération de l'étape 92.

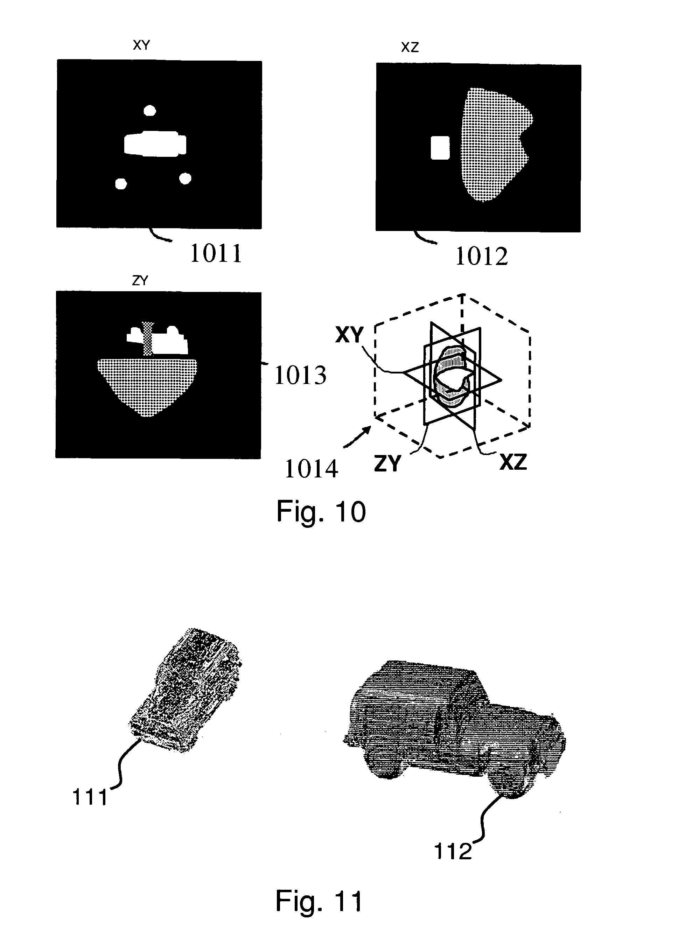

La figure 10 illustre la quatrième étape 104 du procédé de traitement des images qui est l'extraction de la zone d'intérêt. La scène reconstruite se présente sous forme d'une matrice 3D de nombres réels 1014 représentant des intensités. Pour l'exploiter, on utilise une représentation de plans de coupe 2D XY, XZ, ZY selon les trois axes principaux du cube permettant d'isoler visuellement une région d'intérêt 1011, 1012, 1013. Une fois cette opération effectuée, on obtient un volume d'intérêt dans lequel on a sélectionné l'information que l'on veut représenter ; toutes ces opérations se font manuellement mais peuvent très bien être automatisées par ajout de critère sur la localisation dans la scène (par exemple on sait que l'objet recherché sera à une hauteur donnée par rapport au sol dans la scène) ou sur les intensités ou sur la reconnaissance de formes.

La cinquième étape 105 est une étape de construction de la surface de l'objet 111 par regroupement des voxels. L'objet 111 est une formation de plusieurs voxels. La fonction mise en place à cette étape utilise un critère de regroupement des voxels dans la région d'intérêt en fonction de l'intensité ; une forme se dégage de ce regroupement et il ne reste plus qu'à reconstruire la surface de l'objet par iso-densités et mise en lumière pour le rendu. A l'issue de cette étape 105, on obtient une surface 112.

La sixième étape du procédé est une étape identification de l'objet reconstruit avec une base de données d'objets. La surface reconstruite est comparée par un opérateur à une base de donnée de CAO par « matching », reconnaissance de formes, comparaison à des « spin-images » par exemple. Ce traitement peut être automatisé, il peut être effectué sur la station sol ou dans le calculateur de l'UAV.

Le système optronique et le procédé de calcul des images 3D s'appliquent de façon générale à l'identification d'objets pouvant être partiellement masqués dans une scène et qui ne sont pas directement manipulables par l'opérateur. L'invention s'applique au domaine de la sécurité et de la défense pour la détection de cibles camouflées, au domaine médical pour la détection de tumeurs cutanées ou sous-cutanées et également dans le domaine de la microélectronique.

## Revendications

1. Système optronique d'identification d'un objet comportant des moyens d'émission d'une impulsion laser vers l'objet, un capteur photosensible dans le proche IR (42) apte à détecter les niveaux d'intensité de l'impulsion réfléchie par l'objet, des moyens de communication (21, 22) et un moyen de traitement informatique (1) permettant de reconstruire l'objet en trois dimensions à partir des images 2D prises par le capteur et d'identifier l'objet à partir de la reconstruction, **caractérisé en ce que** le capteur photosensible est apte à enregistrer des images de l'objet représentant les niveaux d'intensité d'un rayonnement électromagnétique réfléchi par la surface de l'objet (5) prises selon plusieurs angles d'observation (61, 62) autour de l'objet (5) et les moyens de communication (21, 22) sont aptes à transmettre les dites images au moyen de traitement informatique (1) pour reconstruire l'objet en trois dimensions au moyen d'une fonction de tomographie configurée de sorte à traiter par transformation de Radon inverse en mode réflexion, les dites images de l'objet représentant les niveaux d'intensité d'un rayonnement électromagnétique réfléchi par la surface de l'objet.

2. Système optronique selon la revendication 1, **caractérisé en ce qu'**il comporte également un moyen de pointage vers une position de référence permettant au capteur photosensible d'enregistrer une séquence d'images prises selon des angles d'observation proches et centrées sur la position de référence et **en ce que** le moyen de traitement informatique est apte à positionner sur la position de référence chaque image de la séquence décalée de la position de référence.

3. Système optronique selon la revendication précédente, **caractérisé en ce que** le système comporte également des moyens de mesure de la distance entre le capteur photosensible et la position de référence pour que le moyen de traitement informatique soit apte à modifier les dimensions de l'objet représenté dans une image en fonction de la dite distance de sorte que les dimensions de l'objet représenté dans les images d'une même séquence utilisées pour la reconstruction soient équivalentes entre les images.

4. Système optronique selon l'une des revendications 2 ou 3, **caractérisé en ce que** le moyen de traitement informatique est apte à modifier l'éclairement d'une image en fonction de la distance entre le capteur photosensible et la position de référence de sorte que les images d'une même séquence utilisées pour la reconstruction soient d'un niveau d'éclairement équivalent.

5. Système optronique selon l'une quelconque des revendications précédentes, **caractérisé en ce que** le capteur photosensible est monté sur un engin mobile (3) apte à se déplacer autour de l'objet.

6. Système optronique selon l'une quelconque des revendications précédentes, **caractérisé en ce que** le moyen d'émission d'une impulsion électromagnétique (43) et le capteur photosensible (42) sont montés sur un engin mobile (3) apte à se déplacer autour de l'objet.

7. Système optronique selon l'une quelconque des revendications 5 à 6, **caractérisé en ce que** l'engin mobile est un aéronef.

8. Système optronique selon l'une quelconque des revendications précédentes, **caractérisé en ce qu'**il comporte une base de données d'objet de référence pour identifier l'objet par comparaison avec la reconstruction en trois dimensions.

9. Système optronique selon l'une quelconque des revendications 6 à 7, **caractérisé en ce que** le moyen de traitement informatique est localisé dans une station de calcul distante du capteur photosensible connecté au capteur par les moyens de communication.

10. Procédé de traitement informatique pour l'identification d'objet (5) par reconstruction de l'objet en trois dimensions, **caractérisé en ce qu'**il comporte les étapes successives suivantes:

   • Acquisition (101) au moyen d'un capteur photosensible dans le proche IR d'une séquence d'images 2D de l'objet représentant les niveaux d'intensité d'un rayonnement électromagnétique réfléchi par la surface de l'objet, et prises selon plusieurs angles d'observation (61, 62) autour de l'objet (5),
   • Reconstruction (102) de l'objet en trois dimensions par une fonction de tomographie basée sur une transformation de Radon inverse en mode réflexion et exploitant les images en deux dimensions représentant les niveaux d'intensité d'un rayonnement électromagnétique réfléchi par la surface de l'objet,
   • Extraction (103) de la zone de la reconstruction en trois dimensions comprenant l'objet à identifier,
   • Reconstruction (104) de la surface de l'objet en trois dimensions,
   • Comparaison (105) de l'objet en trois dimensions avec un objet de référence.

11. Procédé selon la revendication 10, **caractérisé en ce qu'**il comporte, à la suite de l'étape d'acquisition d'images, une étape de positionnement d'une image sur une position de référence.

12. Procédé selon la revendication 10, **caractérisé en ce qu'**il comporte, à la suite de l'étape d'acquisition d'images, une étape de redimensionnement d'une image par rapport à une image de référence pour que les dimensions de l'objet détecté dans une image soient similaires aux dimensions de l'objet dans une image de référence.

**13.** Procédé selon la revendication 10, **caractérisé en ce qu'**il comporte, à la suite de l'étape d'acquisition d'images, une étape de modification de l'éclairement d'une image en fonction d'une image de référence pour que l'éclairement de l'image soit similaire à l'éclairement d'une image de référence.

**14.** Procédé selon la revendication 10, **caractérisé en ce qu'**il comporte, à la suite de l'étape d'acquisition d'images, une étape de traitement du sinogramme d'une image (121) pour extraire les informations relatives à l'objet des autres informations de l'image.

**Patentansprüche**

**1.** Optronisches Identifikationssystem eines Objekts, das Mittel zum Senden eines Laserimpulses in Richtung des Objekts, einen lichtempfindlichen Sensor (42) im IR-nahen Bereich, der imstande ist, die Intensitätsniveaus des von dem Objekt reflektierten Impulses zu ermitteln, Kommunikationsmittel (21, 22) und ein Datenverarbeitungsmittel (1) umfasst, das erlaubt, das Objekt aus 2D-Bildern, die von dem Sensor aufgenommen wurden, in drei Dimensionen zu rekonstruieren und das Objekt auf der Basis der Rekonstruktion zu identifizieren, **dadurch gekennzeichnet, dass** der lichtempfindliche Sensor imstande ist, Bilder des Objekts, die die Intensitätsniveaus einer von der Oberfläche des Objekts (5) reflektierten elektromagnetischen Strahlung darstellen, die aus mehreren Beobachtungswinkeln (61, 62) um das Objekt (5) aufgenommen wurden, zu speichern, und die Kommunikationsmittel (21, 22) imstande sind, die Bilder an das Datenverarbeitungsmittel (1) zu übertragen, um das Objekt in drei Dimensionen mit Hilfe einer Tomographiefunktion zu rekonstruieren, die so konfiguriert ist, dass die Bilder des Objekts, die die Intensitätsniveaus einer von der Oberfläche des Objekts reflektierten elektromagnetischen Strahlung darstellen, mit Hilfe einer inversen Radontransformation im Reflexionsmodus verarbeitet werden.

**2.** Optronisches System nach Anspruch 1, **dadurch gekennzeichnet, dass** es ebenfalls ein Mittel zum Zielen in Richtung einer Referenzposition aufweist, wodurch dem lichtempfindlichen Sensor ermöglicht wird, eine Sequenz von Bildern zu speichern, die aus nahen Beobachtungswinkeln aufgenommen wurden und auf die Referenzposition zentriert sind, und dass das Datenverarbeitungsmittel imstande ist, jedes Bild der Sequenz, das von der Referenzposition versetzt ist, in Referenzposition zu positionieren.

**3.** Optronisches System nach vorangehendem Anspruch, **dadurch gekennzeichnet, dass** das System ebenfalls Mittel zum Messen des Abstands zwischen dem lichtempfindlichen Sensor und der Referenzposition aufweist, damit das Datenverarbeitungsmittel imstande ist, die Abmessungen des in einem Bild dargestellten Objekts in Abhängigkeit von diesem Abstand so zu verändern, dass die für die Rekonstruktion verwendeten Abmessungen des in den Bildern einer selben Sequenz dargestellten Objekts bildübergreifend äquivalent sind.

**4.** Optronisches System nach einem der Ansprüche 2 oder 3, **dadurch gekennzeichnet, dass** das Datenverarbeitungsmittel imstande ist, die Lichtintensität eines Bildes in Abhängigkeit vom Abstand zwischen dem lichtempfindlichen Sensor und der Referenzposition derart zu verändern, dass die Bilder einer selben Sequenz, die für die Rekonstruktion verwendet werden, ein äquivalentes Lichtintensitätsniveau besitzen.

**5.** Optronisches System nach einem der vorangehenden Ansprüche, **dadurch gekennzeichnet, dass** der lichtempfindliche Sensor auf einem mobilen Fahrzeug (3) montiert ist, das imstande ist, sich um das Objekt zu bewegen.

**6.** Optronisches System nach einem der vorangehenden Ansprüche, **dadurch gekennzeichnet, dass** das Mittel zum Senden eines elektromagnetischen Impulses (43) und der lichtempfindliche Sensor (42) auf einem mobilen Fahrzeug (3) montiert sind, das imstande ist, sich um das Objekt zu bewegen.

**7.** Optronisches System nach einem der Ansprüche 5 bis 6, **dadurch gekennzeichnet, dass** das mobile Fahrzeug ein Luftfahrzeug ist.

**8.** Optronisches System nach einem der vorangehenden Ansprüche, **dadurch gekennzeichnet, dass** es eine Referenzobjekt-Datenbank aufweist, um das Objekt durch Vergleich mit der dreidimensionalen Rekonstruktion zu identifizieren.

**9.** Optronisches System nach einem der Ansprüche 6 bis 7, **dadurch gekennzeichnet, dass** das Datenverarbeitungsmittel in einer Rechnerstation lokalisiert ist, die vom lichtempfindlichen Sensor beabstandet und mit dem Sensor durch die Kommunikationsmittel verbunden ist.

**10.** Datenverarbeitungsverfahren zur Identifizierung eines Objekts (5) durch Rekonstruktion des Objekts in drei Dimensionen, **dadurch gekennzeichnet, dass** es die folgenden aufeinanderfolgenden Schritte umfasst:

• Erfassen (101) einer Sequenz von 2D-Bildern des Objekts, die die Intensitätsniveaus einer von der Oberfläche des Objekts reflektierten elektromagnetischen Strahlung darstellen und aus mehreren Beobachtungswinkeln (61, 62) um das Objekt (5) aufgenommen wurden, mit Hilfe eines lichtempfindlichen Sensors im IR-nahen Bereich,
• Rekonstruieren (102) des Objekts in drei Dimensionen durch eine Tomographiefunktion, basierend auf einer inversen Radontransformation im Reflexionsmodus und Auswerten der Bilder in zwei Dimensionen, die die Intensitätsniveaus einer von der Oberfläche des Objekts reflektierten elektromagnetischen Strahlung darstellen,
• Extrahieren (103) der dreidimensionalen Rekonstruktionszone, die das zu identifizierende Objekt umfasst,
• Rekonstruieren (104) der Oberfläche des Objekts in drei Dimensionen,
• Vergleichen (105) des Objekts in drei Dimensionen mit einem Referenzobjekt.

**11.** Verfahren nach Anspruch 10, **dadurch gekennzeichnet, dass** es nach dem Schritt der Bilderfassung einen Schritt der Positionierung eines Bildes auf einer Referenzposition aufweist.

**12.** Verfahren nach Anspruch 10, **dadurch gekennzeichnet, dass** es nach dem Schritt der Bilderfassung einen Schritt der Neudimensionierung eines Bildes im Verhältnis zu einem Referenzbild aufweist, damit die Abmessungen des in einem Bild erfassten Objekts den Abmessungen des Objekts in einem Referenzbild ähneln.

**13.** Verfahren nach Anspruch 10, **dadurch gekennzeichnet, dass** es nach dem Schritt der Bilderfassung einen Schritt der Änderung der Lichtintensität eines Bildes in Abhängigkeit von einem Referenzbild aufweist, damit die Lichtintensität des Bildes der Lichtintensität eines Referenzbildes ähnelt.

**14.** Verfahren nach Anspruch 10, **dadurch gekennzeichnet, dass** es nach dem Schritt der Bilderfassung einen Schritt der Bearbeitung des Sinogramms eines Bildes (121) aufweist, um die Informationen zu extrahieren, die sich auf das Objekt der anderen Informationen des Bildes beziehen.

**Claims**

**1.** An optronic system for identifying an object, comprising means for emitting a laser pulse toward said object, a light-sensitive sensor (42) in near-IR capable of detecting the intensity levels of the pulse reflected by said object, communication means (21, 22) and a computer processing means (1) allowing said object to be reconstructed in three-dimensions on the basis of 2D images taken by said sensor and allowing said object to be identified on the basis of the reconstruction, **characterised in that** said light-sensitive sensor is capable of recording images of said object representing the intensity levels of an electromagnetic radiation reflected by the surface of said object (5) taken along a plurality of observation angles (61, 62) around said object (5), and said communication means (21, 22) are capable of transmitting said images to said computer processing means (1) so as to reconstruct said object in three dimensions by means of a tomography function configured so as to process, by inverse Radon transform in reflection mode, said images of said object representing the intensity levels of an electromagnetic radiation reflected by the surface of said object.

**2.** The optronic system according to claim 1, **characterised in that** it further comprises means for pointing toward a reference position allowing said light-sensitive sensor to record a sequence of images taken along observation angles that are close and centred on the reference position, and **in that** said computer processing means is capable of positioning, on the reference position, each image of the sequence shifted from the reference position.

**3.** The optronic system according to the preceding claim, **characterised in that** said system further comprises means for measuring the distance between said light-sensitive sensor and the reference position so that said computer processing means is capable of modifying the dimensions of the object represented in an image as a function of said distance, so that the dimensions of the object shown in the images of the same sequence used for the reconstruction are equivalent between the images.

**4.** The optronic system according to claim 2 or 3, **characterised in that** said computer processing means is capable of modifying the illumination of an image as a function of the distance between said light-sensitive sensor and the reference position so that the images of the same sequence used for the reconstruction are at an equivalent illumination level.

5. The optronic system according to any one of the preceding claims, **characterised in that** said light-sensitive sensor is mounted on a movable craft (3) capable of moving around said object.

6. The optronic system according to any one of the preceding claims, **characterised in that** said means for emitting an electromagnetic pulse (43) and said light-sensitive sensor (42) are mounted on a movable craft (3) capable of moving around said object.

7. The optronic system according to any one of claims 5 to 6, **characterised in that** said movable craft is an aircraft.

8. The optronic system according to any one of the preceding claims, **characterised in that** it comprises a database of reference objects for identifying the object by comparing it with the three-dimensional reconstruction.

9. The optronic system according to any one of claims 6 to 7, **characterised in that** said computer processing means is located in a computing station remote from said light-sensitive sensor, connected to said sensor by said communication means.

10. A computer processing method for identifying an object (5) by reconstructing said object in three dimensions, **characterised in that** it comprises the following successive steps:

   • acquiring (101), by means of a light sensitive sensor in near IR, a sequence of 2D images of said object representing the intensity levels of an electromagnetic radiation reflected by the surface of said object, and taken along a plurality of observation angles (61, 62) around said object (5);
   • reconstructing (102) said object in three dimensions using a tomography function based on an inverse Radon transform in reflection mode and evaluating the two-dimensional images representing the intensity levels of an electromagnetic radiation reflected by the surface of said object;
   • extracting (103) the zone of the three-dimensional reconstruction comprising the object to be identified;
   • reconstructing (104) the surface of the object in three dimensions;
   • comparing (105) the three-dimensional object with a reference object.

11. The method according to claim 10, **characterised in that** it comprises, following said image acquisition step, a step of positioning an image on a reference position.

12. The method according to claim 10, **characterised in that** it comprises, following said image acquisition step, a step of re-dimensioning an image relative to a reference image so that the dimensions of the object detected in an image are similar to the dimensions of the object in a reference image.

13. The method according to claim 10, **characterised in that** it comprises, following said image acquisition step, a step of modifying the illumination of an image as a function of a reference image so that the illumination of the image is similar to the illumination of a reference image.

14. The method according to claim 10, **characterised in that** it comprises, following said image acquisition step, a step of processing the sinogram of an image (121) so as to extract the information relating to the object of the other information relating to the image.

FIG.1

FIG.2

FIG.3

Fig. 4

Δx, Δy, Δθ

δx

δy

δθ

## FIG.5

$D_{ref}$

$D_{ref}$

$D_N$

θ/2

$D_{ref}$   $D_N$   $d_{ref}$   $d_N$

## FIG.6

FIG.7

Fig. 8

$$I(x,y,z) = \sum_{\beta} P[u(x,y,\beta),v(x,y,\beta),\beta]w(x,y,\beta)$$

$$u = \frac{t.D}{D-s}$$

$$v = \frac{z.D}{D-s}$$

$$w = \frac{D}{\sqrt{D^2 + u^2 + v^2}}$$

$$s = x.\cos(\alpha) + y.\sin(\beta)$$

$$t = -x.\sin(\alpha) + y.\cos(\beta)$$

Fig. 9

XY

XZ

1011

1012

ZY

1013

XY

ZY    XZ

1014

Fig. 10

111

112

Fig. 11

121

122

123

124

125

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080181487 A

**Littérature non-brevet citée dans la description**

- Jigsaw: a foliage Penetrating 3D imaging laser radar system. *Lincoln laboratory Journal,* 2005, vol. 15 (1

- **KAPOOR R. et al.** *Features for detecting obscured objects in ultra-wideband (UWB) SAR imagery using a phenomenological approach,* ISSN 0031-3203